(19) Europäisches Patentamt
European Patent Office
Office européen des brevets

(11) Veröffentlichungsnummer: **0 253 213**
**B1**

(12) **EUROPÄISCHE PATENTSCHRIFT**

(45) Veröffentlichungstag der Patentschrift: **28.03.90**

(51) Int. Cl.⁴: **C07C 259/00**, A01N 37/50

(21) Anmeldenummer: **87109502.2**

(22) Anmeldetag: **02.07.87**

(54) **Oximether und enthaltende Fungizide.**

(30) Priorität: **16.07.86 DE 3623921**

(43) Veröffentlichungstag der Anmeldung:
**20.01.88 Patentblatt 88/3**

(45) Bekanntmachung des Hinweises auf die Patenterteilung:
**28.03.90 Patentblatt 90/13**

(84) Benannte Vertragsstaaten:
**AT BE CH DE ES FR GB GR IT LI NL SE**

(56) Entgegenhaltungen:
**EP-A- 0 023 890**
**EP-A- 0 067 792**
**DE-A- 2 265 234**
**DE-A- 2 808 317**

(73) Patentinhaber: **BASF Aktiengesellschaft,**
**Carl-Bosch-Strasse 38, D-6700 Ludwigshafen(DE)**

(72) Erfinder: **Wenderoth, Bernd, Dr., Schwalbenstrasse 26,**
**D-6840 Lampertheim(DE)**
Erfinder: **Rentzea, Costin, Dr.,**
**Richard-Kuhn-Strasse 1-3, D-6900 Heidelberg(DE)**
Erfinder: **Ammermann, Eberhard, Dr., Sachsenstrasse 3,**
**D-6700 Ludwigshafen(DE)**
Erfinder: **Pommer, Ernst-Heinrich, Dr., Berliner Platz 7,**
**D-6703 Limburgerhof(DE)**
Erfinder: **Steglich, Wolfgang, Prof. Dr., Hobsweg 77,**
**D-5300 Bonn-Roettgen(DE)**
Erfinder: **Anke, Timm, Prof. Dr.,**
**Theodor-Heuss-Strasse 17, D-6750 Kaiserslautern(DE)**

EP 0 253 213 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue Oximetherderivate, ihre Herstellung und ihre Verwendung als Fungizide.

Es ist bekannt, N-Tridecyl-2,6-dimethylmorpholin oder seine Salze, z.B. das Acetat, als Fungizide zu verwenden (DE-1 164 152, 1 173 722). Ihre Wirkung ist jedoch in manchen Fällen ungenügend. Es ist ferner bekannt, Acrylsäurederivate, z.B. den 2-(4-[p-Chlorstyryl]-phenyl)-3-methoxyacrylsäuremethylester, als Fungizide zu verwenden (EP-178 826). Ihre Wirkung ist jedoch unbefriedigend.

Es wurde nun gefunden, daß neue Oximetherderivate der Formel I

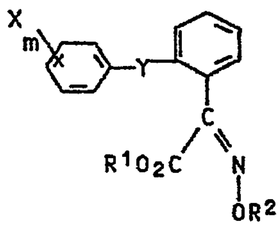

(I)

in der
$R_1$ und $R^2$ gleich oder verschieden sind und Wasserstoff oder Alkyl mit 1 bis 5 C-Atomen bedeuten,
X (m = 1 bis 5) gleiche oder verschiedene Substituenten Halogen, Cyano, Trifluormethyl, Nitro, $C_1$-$C_4$-Alkyl, $C_1$-$C_4$-Alkoxy, gegebenenfalls substituiertes Phenyl, gegebenenfalls substituiertes Phenoxy, gegebenenfalls substituiertes Benzyloxy oder Wasserstoff bedeutet und Y Methylenoxy, Oxymethylen, Ethylen, Ethenylen, Ethinylen oder Sauerstoff bedeutet,
neben einer sehr hohen fungitoxischen Wirkung auch eine sehr gute Pflanzenverträglichkeit besitzen.

Die neuen Verbindungen der Formel I fallen bei ihrer Herstellung aufgrund der C=N-Doppelbindung als E/Z-Isomerengemische an, die in üblicher Weise, z.B. durch Kristallisation oder Chromatographie, in die einzelnen Komponenten getrennt werden können. Sowohl die einzelnen isomeren Verbindungen als auch ihre Gemische werden von der Erfindung umfaßt.

$R^1$ bedeutet bevorzugt Wasserstoff oder $C_1$-$C_3$-Alkyl, wie Methyl, Ethyl und Isopropyl, $R^2$ steht bevorzugt für Wasserstoff oder $C_1$-$C_5$-Alkyl, wie Methyl, Ethyl, n-Propyl, Isopropyl, n-Butyl, sek.-Butyl, Isobutyl, tert.-Butyl, n-Pentyl und Neopentyl.

X ist bevorzugt Wasserstoff, 2-Fluor-, 3-Fluor-, 4-Fluor-, 2-Chlor-6-fluor-, 2-Chlor-, 3-Chlor-, 4-Chlor-, 2-Brom-, 3-Brom-, 4-Brom-, 2,4-Dichlor-, 2,6-Dichlor-, 3.5-Dichlor-, 2,4,6-Trichlor-, 2-Chlor-4-methyl-, 2-Methyl-4-chlor-, 2-Methyl-, 3-Methyl-, 4-Methyl-, 4-Ethyl-, 4-Isopropyl-, 4-tert.-Butyl, 2,4-Dimethyl-, 2,6-Dimethyl-, 2,4,6-Trimethyl-, 2-Methoxy-4-methyl-, 4-Methoxy-2-methyl, 2-Methoxy-, 3-Methoxy-, 4-Methoxy-, 4-Ethoxy-, 4-Isopropoxy-, 2-Trifluormethyl-, 3-Trifluormethyl-, 4-Trifluormethyl-, 2-Cyano-, 4-Cyano-, 3-Nitro-, 4-Nitro-, 4-Phenyl, 4-Benzyloxy-, 4-Phenoxy, Halogenphenoxy, 4-(2-Chlor)-phenoxy-, 4-(2,4-Dichlor)-phenoxy-, $C_1$-$C_4$-Alkylphenoxy, 4-(2-Methyl)-phenoxy-, 3-Benzyloxy-, Halogen-benzyloxy-, 3-(2-Chlor)-benzyloxy-, 3-(2,4-Dichlor)-benzyloxy-, 3-(2-Fluor)-benzyloxy-, 3-(4-Brom)-benzyloxy-, $C_1$-$C_4$-Alkylbenzyloxy-, 3-(2-Methyl)-benzyloxy-, 3-Phenoxy-, 3-(2-Chlor)-phenoxy-, 3-(2,4-Dichlor)-phenoxy-, 3-(2-Fluor)-phenoxy-, 3-(4-Brom)-phenoxy, 3-(2-Methyl)-phenoxy-, Y ist bevorzugt eine $-CH_2O-$, $-OCH_2-$, $-CH_2-CH_2-$, CH=CH-, C≡C-Gruppe oder steht für O.

Die neuen Verbindungen lassen sich herstellen, indem man einen α-Ketocarbonsäureester der Formel II

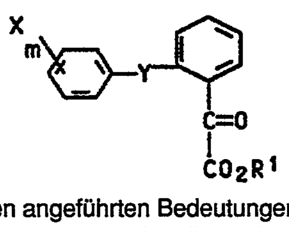

(II)

in der $X_m$, Y und $R^1$ die oben angeführten Bedeutungen haben
a) mit O-substituierten Hydroxylaminen der allgemeinen Formel III
$H_2N$-O-$R^2$ (III)
umsetzt, in der $R^2$ die oben genannten Bedeutungen hat,
oder
b) mit Hydroxylamin zum entsprechenden Oxim und danach mit einem Halogenderivat der Formel IV
$R^2$-X (IV)
umsetzt, in der $R^2$ die oben genannten Bedeutungen hat un X ein Halogenatom (F, Cl, Br, J) bedeutet oder mit einem Dialkylsulfat umsetzt.

Die α-Ketocarbonsäureester der Formel II können z.B. durch die Umsetzung der entsprechenden aromatischen Grignard-Verbindungen mit Imidazoliden der Formel V

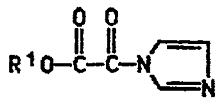

(V)

hergestellt werden (J.S. Nimitz, H.S. Mosher, J. Org. Chem. 1981, 46, 211-213), wobei $R^1$ die oben angeführten Bedeutungen hat.

Die Herstellung der neuen Verbindungen der Formel I wird durch folgendes Beispiel erläutert:

a) Herstellung von 2-(Benzyloxy)-phenylglyoxylsäuremethylester

0,1 mol einer aus 1-Benzyloxy-2-brombenzol und Magnesiumspänen in Tetrahydrofuran hergestellten Grignard-Verbindung werden unter Stickstoff bei -50°C zu 14,6 g (95 mmol) Methyloxalylimidazol in Tetrahydrofuran langsam zugetropft. Über einen Zeitraum von 4 Stunden läßt man die Mischung langsam auf Raumtermperatur (20°C) kommen. Man gießt sie auf Eiswasser und extrahiert mehrmals mit Ether. Die vereinigten Etherphasen werden neutral gewaschen und getrocknet. Nach dem Abdampfen des Lösungsmittels wird das Produkt mit n-Pentan zur Kristallisation gebracht. Man erhält 16 g (62 %) farblose Kristalle der oben genannten Verbindung.

$^1$H-NMR ($CDCl_3$): δ = 3,35 (S, 3H), 5,07 (S, 2H), 7,05 (m, 2H), 7,40 (m, 5H), 7,55 (m, 1H), 7,90 (m, 1H).

b) Herstellung von (Z)-(2-Benzyloxyphenyl)-glyoxylsäuremethylester-O-methyloxim (Verb.-Nr. 83)

15,5 g (57 mmol) 2-(Benzyloxy)-phenylglyoxylsäuremethylester werden in 160 ml Methanol vorgelegt und mit 11,5 g Natriumcarbonat und 9,45 g (114 mmol) 0-Methylhydroxylaminhydrochlorid versetzt. Es wird 24 Stunden unter Rühren am Rückfluß erhitzt. Nach der Zugabe von 100 ml Wasser wird mit Essigester mehrmals extrahiert, die Essigesterlösung mit $Na_2SO_4$ getrocknet und anschließend eingeengt.

Man erhält 11 g (65 %) der oben genannten Verbindung als Isomerengemisch. Nach dem Vermischen mit n-Pentan erhält man das reine (Z)-Isomere als weiße Kristalle vom Fp. 129-132°C.

$^{13}$C-NMR ($CDCl_3$): δ = 51,50, 62,92, 70,93, 112,60 120,49, 121,33, 128,19, 128,52 (2C) 129,04 (3C), 131,70, 135,92, 148,44, 156,50, 163,84.

Unter entsprechender Abwandlung der vorstehenden Angaben können die in der folgenden Tabelle aufgeführten Verbindungen hergestellt werden.

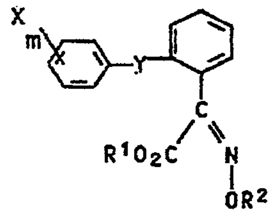

(I)

| Verb.-Nr. | $X_m$ | Y | $R^1$ | $R^2$ | Isomeres | Fp(°C) | IR($cm^{-1}$) |
|---|---|---|---|---|---|---|---|
| 1 | H | $-CH_2-CH_2-$ | $CH_3$ | $CH_3$ | | | |
| 2 | 2-F | $-CH_2-CH_2-$ | $CH_3$ | $CH_3$ | | | |
| 3 | 3-F | $-CH_2-CH_2-$ | $CH_3$ | $CH_3$ | | | |
| 4 | 4-F | $-CH_2-CH_2-$ | $CH_3$ | $CH_3$ | | | |
| 5 | 2-Cl, 6-F | $-CH_2-CH_2-$ | $CH_3$ | $CH_3$ | | | |
| 6 | 2-Cl | $-CH_2-CH_2-$ | $CH_3$ | $CH_3$ | | | |
| 7 | 3-Cl | $-CH_2-CH_2-$ | $CH_3$ | $CH_3$ | | | |
| 8 | 4-Cl | $-CH_2-CH_2-$ | $CH_3$ | $CH_3$ | | | |
| 9 | 2-Br | $-CH_2-CH_2-$ | $CH_3$ | $CH_3$ | | | |
| 10 | 3-Br | $-CH_2-CH_2-$ | $CH_3$ | $CH_3$ | | | |
| 11 | 4-Br | $-CH_2-CH_2-$ | $CH_3$ | $CH_3$ | | | |
| 12 | $2,4-Cl_2$ | $-CH_2-CH_2-$ | $CH_3$ | $CH_3$ | | | |
| 13 | $2,6-Cl_2$ | $-CH_2-CH_2-$ | $CH_3$ | $CH_3$ | | | |
| 14 | $3,5-Cl_2$ | $-CH_2-CH_2-$ | $CH_3$ | $CH_3$ | | | |
| 15 | $2,4,6-Cl_3$ | $-CH_2-CH_2-$ | $CH_3$ | $CH_3$ | | | |
| 16 | $2-Cl, 4-CH_3$ | $-CH_2-CH_2-$ | $CH_3$ | $CH_3$ | | | |
| 17 | $2-CH_3, 4-Cl$ | $-CH_2-CH_2-$ | $CH_3$ | $CH_3$ | | | |
| 18 | $2-CH_3$ | $-CH_2-CH_2-$ | $CH_3$ | $CH_3$ | | | |
| 19 | $3-CH_3$ | $-CH_2-CH_2-$ | $CH_3$ | $CH_3$ | | | |
| 20 | $4-CH_3$ | $-CH_2-CH_2-$ | $CH_3$ | $CH_3$ | | | |
| 21 | $4-C_2H_5$ | $-CH_2-CH_2-$ | $CH_3$ | $CH_3$ | | | |
| 22 | $4-i-C_3H_7$ | $-CH_2-CH_2-$ | $CH_3$ | $CH_3$ | | | |
| 23 | $4-t-C_4H_9$ | $-CH_2-CH_2-$ | $CH_3$ | $CH_3$ | | | |
| 24 | $2,4-(CH_3)_2$ | $-CH_2-CH_2-$ | $CH_3$ | $CH_3$ | | | |
| 25 | $2,6-(CH_3)_2$ | $-CH_2-CH_2-$ | $CH_3$ | $CH_3$ | | | |
| 26 | $2,4,6-(CH_3)_3$ | $-CH_2-CH_2-$ | $CH_3$ | $CH_3$ | | | |
| 27 | $2-OCH_3, 4-CH_3$ | $-CH_2-CH_2-$ | $CH_3$ | $CH_3$ | | | |
| 28 | $4-OCH_3, 2-CH_3$ | $-CH_2-CH_2-$ | $CH_3$ | $CH_3$ | | | |
| 29 | $2-OCH_3$ | $-CH_2-CH_2-$ | $CH_3$ | $CH_3$ | | | |

| Verb.-Nr. | $X_m$ | Y | $R^1$ | $R^2$ | Isomeres | Fp(°C) | IR(cm⁻¹) |
|---|---|---|---|---|---|---|---|
| 30 | 3-$OCH_3$ | $-CH_2-CH_2-$ | $CH_3$ | $CH_3$ | | | |
| 31 | 4-$OCH_3$ | $-CH_2-CH_2-$ | $CH_3$ | $CH_3$ | | | |
| 32 | 4-$OC_2H_5$ | $-CH_2-CH_2-$ | $CH_3$ | $CH_3$ | | | |
| 33 | 4-O-i-$C_3H_7$ | $-CH_2-CH_2-$ | $CH_3$ | $CH_3$ | | | |
| 34 | 2-$CF_3$ | $-CH_2-CH_2-$ | $CH_3$ | $CH_3$ | | | |
| 35 | 3-$CF_3$ | $-CH_2-CH_2-$ | $CH_3$ | $CH_3$ | | | |
| 36 | 4-$CF_3$ | $-CH_2-CH_2-$ | $CH_3$ | $CH_3$ | | | |
| 37 | 2-CN | $-CH_2-CH_2-$ | $CH_3$ | $CH_3$ | | | |
| 38 | 4-CN | $-CH_2-CH_2-$ | $CH_3$ | $CH_3$ | | | |
| 39 | 3-$NO_2$ | $-CH_2-CH_2-$ | $CH_3$ | $CH_3$ | | | |
| 40 | 4-$NO_2$ | $-CH_2-CH_2-$ | $CH_3$ | $CH_3$ | | | |
| 41 | 4-$C_6H_5$ | $-CH_2-CH_2-$ | $CH_3$ | $CH_3$ | | | |
| 42 | H | -CH=CH- | $CH_3$ | $CH_3$ | Z | Öl | 2960, 1740, 1496, 1455, 1227, 1043, 1017, 962, 760, 692 |
| 43 | 2-F | -CH=CH- | $CH_3$ | $CH_3$ | | | |
| 44 | 3-F | -CH=CH- | $CH_3$ | $CH_3$ | | | |
| 45 | 4-F | -CH=CH- | $CH_3$ | $CH_3$ | | | |
| 46 | 2-Cl, 6-F | -CH=CH- | $CH_3$ | $CH_3$ | | | |
| 47 | 2-Cl | -CH=CH- | $CH_3$ | $CH_3$ | | | |
| 48 | 3-Cl | -CH=CH- | $CH_3$ | $CH_3$ | | | |
| 49 | 4-Cl | -CH=CH- | $CH_3$ | $CH_3$ | E/Z | Öl | 2970, 1740, 1492, 1456, 1228, 1091, 1044, 1013, 962, 813, 753 |
| 50 | 2-Br | -CH=CH- | $CH_3$ | $CH_3$ | | | |
| 51 | 3-Br | -CH=CH- | $CH_3$ | $CH_3$ | | | |
| 52 | 4-Br | -CH=CH- | $CH_3$ | $CH_3$ | | | |
| 53 | 2,4-$Cl_2$ | -CH=CH- | $CH_3$ | $CH_3$ | | | |
| 54 | 2,6-$Cl_2$ | -CH=CH- | $CH_3$ | $CH_3$ | | | |
| 55 | 3,5-$Cl_2$ | -CH=CH- | $CH_3$ | $CH_3$ | | | |
| 56 | 2,4,6-$Cl_3$ | -CH=CH- | $CH_3$ | $CH_3$ | | | |
| 57 | 2-Cl, 4-$CH_3$ | -CH=CH- | $CH_3$ | $CH_3$ | | | |
| 58 | 2-$CH_3$, 4-Cl | -CH=CH- | $CH_3$ | $CH_3$ | | | |
| 59 | 2-$CH_3$ | -CH=CH- | $CH_3$ | $CH_3$ | | | |
| 60 | 3-$CH_3$ | -CH=CH- | $CH_3$ | $CH_3$ | | | |

| Verb.-Nr. | $X_m$ | Y | $R^1$ | $R^2$ | Isomeres | Fp(°C) | IR($cm^{-1}$) |
|---|---|---|---|---|---|---|---|
| 61 | 4-$CH_3$ | -CH=CH- | $CH_3$ | $CH_3$ | | | |
| 62 | 3-$CH_3$ | -CH=CH- | $CH_3$ | $CH_3$ | | | |
| 63 | 4-i-$C_3H_7$ | -CH=CH- | $CH_3$ | $CH_3$ | | | |
| 64 | 4-t-$C_4H_9$ | -CH=CH- | $CH_3$ | $CH_3$ | | | |
| 65 | 2,4-$(CH_3)_2$ | -CH=CH- | $CH_3$ | $CH_3$ | | | |
| 66 | 2,6-$(CH_3)_2$ | -CH=CH- | $CH_3$ | $CH_3$ | | | |
| 67 | 2,4,6-$(CH_3)_3$ | -CH=CH- | $CH_3$ | $CH_3$ | | | |
| 68 | 2-$OCH_3$, 4-$CH_3$ | -CH=CH- | $CH_3$ | $CH_3$ | | | |
| 69 | 4-$OCH_3$, 2-$CH_3$ | -CH=CH- | $CH_3$ | $CH_3$ | | | |
| 70 | 2-$OCH_3$ | -CH=CH- | $CH_3$ | $CH_3$ | | | |
| 71 | 3-$OCH_3$ | -CH=CH- | $CH_3$ | $CH_3$ | | | |
| 72 | 4-$OCH_3$ | -CH=CH- | $CH_3$ | $CH_3$ | | | |
| 73 | 4-$OC_2H_5$ | -CH=CH- | $CH_3$ | $CH_3$ | | | |
| 74 | 4-O-i$C_3H_7$ | -CH=CH- | $CH_3$ | $CH_3$ | | | |
| 75 | 2-$CF_3$ | -CH=CH- | $CH_3$ | $CH_3$ | | | |
| 76 | 3-$CF_3$ | -CH=CH- | $CH_3$ | $CH_3$ | | | |
| 77 | 4-$CF_3$ | -CH=CH- | $CH_3$ | $CH_3$ | | | |
| 78 | 2-CN | -CH=CH- | $CH_3$ | $CH_3$ | | | |
| 79 | 4-CN | -CH=CH- | $CH_3$ | $CH_3$ | | | |
| 80 | 3-$NO_2$ | -CH=CH- | $CH_3$ | $CH_3$ | | | |
| 81 | 4-$NO_2$ | -CH=CH- | $CH_3$ | $CH_3$ | | | |
| 82 | 4-$C_6H_5$ | -CH=CH- | $CH_3$ | $CH_3$ | | | |
| 83 | H | -$CH_2O$- | $CH_3$ | $CH_3$ | Z | 129-132 | 2940, 1737 1489, 1455 1343, 1278 1234, 1045 1027, 758 |
| 84 | 2-F | -$CH_2O$- | $CH_3$ | $CH_3$ | | | |
| 85 | 3-F | -$CH_2O$- | $CH_3$ | $CH_3$ | E/Z | 46-48 | 2970,1734, 1592,1492, 1452,1278, 1231,1028, 755 |
| 86 | 4-F | -$CH_2O$- | $CH_3$ | $CH_3$ | E/Z | 97-99 | 2970,1740, 1600,1513, 1487,1276, 1224,1042, 1025, 879, 751 |
| 87 | 2-Cl, 6-F | -$CH_2O$- | $CH_3$ | $CH_3$ | | | |
| 88 | 2-Cl | -$CH_2O$- | $CH_3$ | $CH_3$ | | | |

| Verb.-Nr. | $X_m$ | Y | $R^1$ | $R^2$ | Isomeres | Fp($^0C$) | IR($cm^{-1}$) |
|---|---|---|---|---|---|---|---|
| 89 | 3-Cl | $-CH_2O-$ | $CH_3$ | $CH_3$ | E/Z | Öl | 2970, 1742, 1600, 1490, 1453, 1279, 1228, 1044, 1024, 759 |
| 90 | 4-Cl | $-CH_2O-$ | $CH_3$ | $CH_3$ | Z | 106-109 | 2975, 1738, 1598, 1489, 1277, 1235, 1041, 1026, 873, 759 |
| 91 | 2-Br | $-CH_2O-$ | $CH_3$ | $CH_3$ | | | |
| 92 | 3-Br | $-CH_2O-$ | $CH_3$ | $CH_3$ | | | |
| 93 | 4-Br | $-CH_2O-$ | $CH_3$ | $CH_3$ | | | |
| 94 | 2,4-$Cl_2$ | $-CH_2O-$ | $CH_3$ | $CH_3$ | | | |
| 95 | 2,6-$Cl_2$ | $-CH_2O-$ | $CH_3$ | $CH_3$ | | | |
| 96 | 3,5-$Cl_2$ | $-CH_2O-$ | $CH_3$ | $CH_3$ | | | |
| 97 | 2,4,6-$Cl_3$ | $-CH_2O-$ | $CH_3$ | $CH_3$ | | | |
| 98 | 2-$CH_3$, 4-Cl | $-CH_2O-$ | $CH_3$ | $CH_3$ | | | |
| 99 | 2-Cl, 4-$CH_3$ | $-CH_2O-$ | $CH_3$ | $CH_3$ | | | |
| 100 | 2-$CH_3$ | $-CH_2O-$ | $CH_3$ | $CH_3$ | E/Z | | 2970, 1735, 1489, 1454, 1278, 1231, 1045, 1025, 750 |
| 101 | 3-$CH_3$ | $-CH_2O-$ | $CH_3$ | $CH_3$ | E/Z | 47-49 | 2970, 1736, 1600, 1490, 1453, 1279, 1227, 1045, 1026, 755 |
| 102 | 4-$CH_3$ | $-CH_2O-$ | $CH_3$ | $CH_3$ | E/Z | 92-94 | 2970, 1736, 1600, 1490, 1454, 1278, 1232, 1043 1027, 761 |
| 103 | 4-$C_2H_5$ | $-CH_2O-$ | $CH_3$ | $CH_3$ | | | |
| 104 | 4-i-$C_3H_7$ | $-CH_2O-$ | $CH_3$ | $CH_3$ | | | |
| 105 | 4-t-$C_4H_9$ | $-CH_2O-$ | $CH_3$ | $CH_3$ | | | |
| 106 | 2,4-$(CH_3)_2$ | $-CH_2O-$ | $CH_3$ | $CH_3$ | | | |
| 107 | 2,6-$(CH_3)_2$ | $-CH_2O-$ | $CH_3$ | $CH_3$ | | | |
| 108 | 2,4,6-$(CH_3)_3$ | $-CH_2O-$ | $CH_3$ | $CH_3$ | | | |
| 109 | 2-$OCH_3$, 4-$CH_3$ | $-CH_2O-$ | $CH_3$ | $CH_3$ | | | |
| 110 | 4-$OCH_3$, 2-$CH_3$ | $-CH_2O-$ | $CH_3$ | $CH_3$ | | | |
| 111 | 2-$OCH_3$ | $-CH_2O-$ | $CH_3$ | $CH_3$ | | | |
| 112 | 3-$OCH_3$ | $-CH_2O-$ | $CH_3$ | $CH_3$ | | | |
| 113 | 4-$OCH_3$ | $-CH_2O-$ | $CH_3$ | $CH_3$ | | | |

| Verb.-Nr. | $X_m$ | Y | $R^1$ | $R^2$ | Isomeres | Fp(°C) | IR(cm⁻¹) |
|---|---|---|---|---|---|---|---|
| 114 | $4-OC_2H_5$ | $-CH_2O-$ | $CH_3$ | $CH_3$ | | | |
| 115 | $4-O-i-C_3H_7$ | $-CH_2O-$ | $CH_3$ | $CH_3$ | | | |
| 116 | $2-CF_3$ | $-CH_2O-$ | $CH_3$ | $CH_3$ | | | |
| 117 | $3-CF_3$ | $-CH_2O-$ | $CH_3$ | $CH_3$ | | | |
| 118 | $4-CF_3$ | $-CH_2O-$ | $CH_3$ | $CH_3$ | | | |
| 119 | 2-CN | $-CH_2O-$ | $CH_3$ | $CH_3$ | | | |
| 120 | 4-CN | $-CH_2O-$ | $CH_3$ | $CH_3$ | | | |
| 121 | $3-NO_2$ | $-CH_2O-$ | $CH_3$ | $CH_3$ | | | |
| 122 | $4-NO_2$ | $-CH_2O-$ | $CH_3$ | $CH_3$ | | | |
| 123 | $4-C_6H_5$ | $-CH_2O-$ | $CH_3$ | $CH_3$ | | | |
| 124 | H | $-OCH_2-$ | $CH_3$ | $CH_3$ | E/Z | Öl | 2940, 1742 1598, 1496 1239, 1227 1046, 1019 755 |
| 125 | 2-F | $-OCH_2-$ | $CH_3$ | $CH_3$ | | | |
| 126 | 2-Cl | $-OCH_2-$ | $CH_3$ | $CH_3$ | | | |
| 127 | 4-Cl | $-OCH_2-$ | $CH_3$ | $CH_3$ | | | |
| 128 | $2,4-Cl_2$ | $-OCH_2-$ | $CH_3$ | $CH_3$ | | | |
| 129 | $2-CH_3$, 4-Cl | $-OCH_2-$ | $CH_3$ | $CH_3$ | | | |
| 130 | $2-CH_3$ | $-OCH_2-$ | $CH_3$ | $CH_3$ | | | |
| 131 | $4-CH_3$ | $-OCH_2-$ | $CH_3$ | $CH_3$ | | | |
| 132 | $4-t-C_4H_9$ | $-OCH_2-$ | $CH_3$ | $CH_3$ | | | |
| 133 | $2-OCH_3$ | $-OCH_2-$ | $CH_3$ | $CH_3$ | | | |
| 134 | $2-CF_3$ | $-OCH_2-$ | $CH_3$ | $CH_3$ | | | |
| 135 | $4-NO_2$ | $-OCH_2-$ | $CH_3$ | $CH_3$ | | | |
| 136 | H | Ethinylen | $CH_3$ | $CH_3$ | | | |
| 137 | 2-F | Ethinylen | $CH_3$ | $CH_3$ | | | |
| 138 | 2-Cl | Ethinylen | $CH_3$ | $CH_3$ | | | |
| 139 | 2-Br | Ethinylen | $CH_3$ | $CH_3$ | | | |
| 140 | 4-Br | Ethinylen | $CH_3$ | $CH_3$ | | | |
| 141 | $2-CH_3$ | Ethinylen | $CH_3$ | $CH_3$ | | | |
| 142 | $4-CH_3$ | Ethinylen | $CH_3$ | $CH_3$ | | | |
| 143 | $2-OCH_3$ | Ethinylen | $CH_3$ | $CH_3$ | | | |
| 144 | $4-CF_3$ | Ethinylen | $CH_3$ | $CH_3$ | | | |
| 145 | $2-NO_2$ | Ethinylen | $CH_3$ | $CH_3$ | | | |
| 146 | H | $-CH=CH-$ | $CH_3$ | H | | | |

| Verb.-Nr. | $X_m$ | Y | $R^1$ | $R^2$ | Isomeres | Fp(°C) | IR($cm^{-1}$) |
|---|---|---|---|---|---|---|---|
| 147 | H | $-CH_2-CH_2-$ | $CH_3$ | H | | | |
| 148 | H | $-CH=CH-$ | $CH_3$ | $C_2H_5$ | | | |
| 149 | H | $-CH_2-CH_2-$ | $CH_3$ | $C_3H_7$ | | | |
| 150 | H | $-CH=CH-$ | $CH_3$ | $C_3H_7$ | | | |
| 151 | H | $-CH_2-CH_2-$ | $CH_3$ | $i-C_3H_7$ | | | |
| 152 | H | $-CH_2-CH_2-$ | $CH_3$ | $t-C_4H_9$ | | | |
| 153 | H | $-CH_2-CH_2-$ | $CH_3$ | $C_5H_{11}$ | | | |
| 154 | H | $-CH=CH-$ | $C_2H_5$ | $CH_3$ | | | |
| 155 | H | $-CH_2-CH_2-$ | $C_2H_5$ | $CH_3$ | | | |
| 156 | H | $-CH=CH-$ | $i-C_3H_7$ | $CH_3$ | | | |
| 157 | H | $-CH_2-CH_2-$ | $i-C_3H_7$ | $CH_3$ | | | |
| 158 | H | $-CH=CH-$ | $C_2H_5$ | $C_2H_5$ | | | |
| 159 | H | $-CH_2-CH_2-$ | $C_2H_5$ | $C_2H_5$ | | | |
| 160 | H | O | $CH_3$ | $CH_3$ | | | |
| 161 | 2-F | O | $CH_3$ | $CH_3$ | | | |
| 162 | 2-Cl | O | $CH_3$ | $CH_3$ | | | |
| 163 | 2-Br | O | $CH_3$ | $CH_3$ | | | |
| 164 | 4-Br | O | $CH_3$ | $CH_3$ | | | |
| 165 | 4-Cl | O | $CH_3$ | $CH_3$ | | | |
| 166 | $2-CH_3$ | O | $CH_3$ | $CH_3$ | | | |
| 167 | $4-CH_3$ | O | $CH_3$ | $CH_3$ | | | |
| 168 | $2-OCH_3$ | O | $CH_3$ | $CH_3$ | | | |
| 169 | $4-OCH_3$ | O | $CH_3$ | $CH_3$ | | | |
| 170 | $4-C_6H_5$ | O | $CH_3$ | $CH_3$ | | | |
| 171 | H | $-CH=CH-$ | H | H | | | |
| 172 | H | $-CH_2-CH_2-$ | H | H | | | |
| 173 | $4-OCH_2-C_6H_5$ | $-CH=CH_2-$ | $CH_3$ | $CH_3$ | | | |
| 174 | $4-OCH_2-C_6H_5$ | $-CH_2-CH_2-$ | $CH_3$ | $CH_3$ | | | |
| 175 | $4-OC_6H_5$ | $-CH=CH-$ | $CH_3$ | $CH_3$ | | | |
| 176 | $4-OC_6H_5$ | $-CH_2-CH_2-$ | $CH_3$ | $CH_3$ | | | |
| 177 | 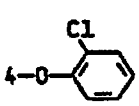 | $-CH_2-CH_2-$ | $CH_3$ | $CH_3$ | | | |
| 178 | 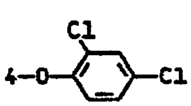 | $-CH_2-CH_2-$ | $CH_3$ | $CH_3$ | | | |

| Verb.-Nr. | $X_m$ | Y | $R^1$ | $R^2$ | Isomeres | Fp(°C) | IR(cm |
|---|---|---|---|---|---|---|---|
| 179 | 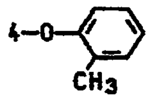 | $-CH_2-CH_2-$ | $CH_3$ | $CH_3$ | | | |
| 180 | $3-OCH_2-C_6H_5$ | $-CH_2-CH_2-$ | $CH_3$ | $CH_3$ | | | |
| 181 | 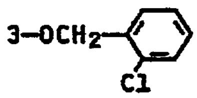 | $-CH_2-CH_2-$ | $CH_3$ | $CH_3$ | | | |
| 182 | 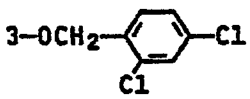 | $-CH_2-CH_2-$ | $CH_3$ | $CH_3$ | | | |
| 183 | 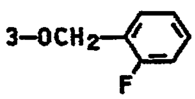 | $-CH_2-CH_2-$ | $CH_3$ | $CH_3$ | | | |
| 184 | 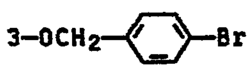 | $-CH_2-CH_2-$ | $CH_3$ | $CH_3$ | | | |
| 185 | 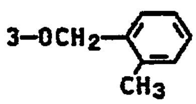 | $-CH_2-CH_2-$ | $CH_3$ | $CH_3$ | | | |
| 186 | $3-OC_6H_5$ | $-CH_2-CH_2-$ | $CH_3$ | $CH_3$ | | | |
| 187 | 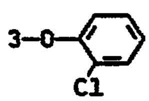 | $-CH_2-CH_2-$ | $CH_3$ | $CH_3$ | | | |
| 188 | 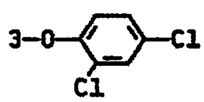 | $-CH_2-CH_2-$ | $CH_3$ | $CH_3$ | | | |
| 189 | 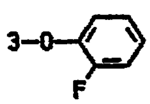 | $-CH_2-CH_2-$ | $CH_3$ | $CH_3$ | | | |
| 190 | 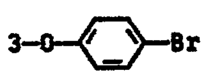 | $-CH_2-CH_2-$ | $CH_3$ | $CH_3$ | | | |
| 191 | 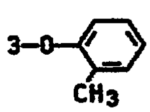 | $-CH_2-CH_2-$ | $CH_3$ | $CH_3$ | | | |

Die neuen Verbindungen zeichnen sich, allgemein ausgedrückt, durch eine hervorragende Wirksamkeit gegen ein breites Spektrum von pflanzenpathogenen Pilzen, insbesondere aus der Klasse der Ascomyceten, Phycomyceten und Basidiomyceten, aus. Sie sind zum Teil systemisch wirksam und können als Blatt-und Bodenfungizide eingesetzt werden.

Besonders interessant sind die fungiziden Verbindungen für die Bekämpfung einer Vielzahl von verschiedenen Kulturpflanzen oder ihren Samen, insbesondere Weizen, Roggen, Gerste, Hafer, Reis, Mais, Baumwolle, Soja, Kaffee, Zuckerrohr, Obst und Zierpflanzen im Gartenbau, Weinbau sowie Gemüse - wie Gurken, Bohnen und Kürbisgewächse -.

Die neuen Verbindungen sind insbesondere geeignet zur Bekämpfung folgender Pflanzenkrankheiten:

Erysiphe graminis (echter Mehltau) in Getreide,
Erysiphe cichoracearum und Sphaerotheca fuliginea an Kürbisgewächsen,
Podosphaera leucotricha an Äpfeln,
Uncinula necator an Reben,
Puccinia-Arten an Getreide,
Rhizoctonia solani an Baumwolle,
Ustilago-Arten an Getreide und Zuckerrohr,
Venturia inaequalis (Schorf) an Äpfeln,
Septoria nodorum an Weizen,
Pyrenophora teres an Gerste,
Botrytis cinerea (Grauschimmel) an Erdbeeren, Reben,
Cercospora arachidicola an Erdnüssen,
Pseudocercosporella herpotrichoides an Weizen, Gerste,
Pyricularia oryzae an Reis,
Phytophthora infestans an Kartoffeln und Tomaten,
Alternaria solani an Kartoffeln, Tomaten,
Plasmopara viticola an Reben sowie Fusarium- und Verticillium-Arten an verschiedenen Pflanzen.

Die Verbindungen werden angewendet, indem man die Pflanzen mit den Wirkstoffen besprüht oder bestäubt oder die Samen der Pflanzen mit den Wirkstoffen behandelt. Die Anwendung erfolgt vor oder nach der Infektion der Pflanzen oder Samen durch die Pilze.

Die neuen Substanzen können in die üblichen Formulierungen übergeführt werden, wie Lösungen, Emulsionen, Suspensionen, Stäube, Pulver, Pasten und Granulate. Die Anwendungsformen richten sich ganz nach den Verwendungszwecken; sie sollen in jedem Fall eine feine und gleichmäßige Verteilung der wirksamen Substanz gewährleisten. Die Formulierungen werden in bekannter Weise hergestellt, z.B. durch Verstrecken des Wirkstoffs mit Lösungsmitteln und/oder Trägerstoffen, gegebenenfalls unter Verwendung von Emulgiermittel und Dispergiermitteln, wobei im Falle der Benutzung von Wasser als Verdünnungsmittel auch andere organische Lösungsmittel als Hifslösungsmittel verwendet werden können. Als Hilfsstoffe kommen dafür im wesentlichen in Frage: Lösungsmittel wie Aromaten (z.B. Xylol, Toluol), chlorierte Aromaten (a.B. Chlorbenzole), Paraffine (z.B. Erdölfraktionen), Alkohole (z.B. Methanol, Butanol), Amine (z.B. Ethanolamin, Dimethylformamid) und Wasser; Trägerstoffe wie natürliche Gesteinsmehle, z.B. Kaoline, Tonerden, Talkum, Kreide und synthetische Gesteinsmehle (z.B. hochdisperse Kieselsäure, Silikate); Emulgiermittel, wie nichtionogene und anionische Emulgatoren (z.B. Polyoxyethylen-Fettalkohol-Ether, Alkylsufonate und Arylsulfonate) und Dispergiermittel, wie Lignin, Sulfitablaugen und Methylcellulose.

Die fungiziden Mittel enthalten im allgemeinen zwischen 0,1 und 95, vorzugsweise zwischen 0,5 und 90 Gew.% Wirkstoff. Die Aufwandmengen liegen je nach Art des gewünschten Effektes zwischen 0,05 und 3 kg Wirkstoff oder mehr je ha.

Die neuen Verbindungen können auch im Materialschutz u.a. zur Bekämpfung holzzerstörender Pilze wie Coniophora puteana und Polystictus versicolor eingesetzt werden. Die neuen Wirkstoffe können auch als fungizid wirksame Bestandteile lösemittelhaltiger Holzschutzmittel zum Schutz von Holz gegen holzverfärbende Pilze eingesetzt werden. Die Anwendung erfolgt in der Weise, daß man das Holz mit diesen Mitteln behandelt, beispielsweise tränkt oder anstreicht.

Die Mittel bzw. die daraus hergestellten gebrauchsfertigen Zubereitungen, wie Lösungen, Emulsionen, Suspensionen, Pulver, Stäube, Pasten oder Granulate werden in bekannter Weise angewendet, beispielsweise durch Versprühen, Vernebeln, Verstäuben, Verstreuen, Beizen oder Gießen.

Beispiele für solche Zubereitungen sind:

I. Man vermischt 90 Gew.-Teile der Verbindung Nr. 83 mit 10 Gew.-Teilen N-Methyl-α-pyrrolidon und erhält eine Lösung, die zur Anwendung in Form kleinster Tropfen geeignet ist.

II. 20 Gew.-Teile der Verbindung Nr. 124 werden in einer Mischung gelöst die aus 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure und 5 Gew.-Teilen des Anlagerungsproduktes und 40 Mol Ethylenoxid an 1 Mol Ricinusöl besteht. Durch Ausgießen und feines Verteilen der Lösung in Wasser erhält man eine wäßrige Dispersion.

III.20 Gew.-Teile der Verbindung Nr. 83 werden in einer Mischung gelöst, die aus 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.

IV. 20 Gew.-Teile der Verbindung Nr. 124 werden in einer Mischung gelöst, die aus 25 Gew.-Teilen Cyclohexanol, 65 Gew.-Teilen einer Mineral-ölfraktion vom Siedepunkt 210 bis 280°C und 10 Gew.-Teilen des Anlagerungsproduktes von 40 Mol Ethylenoxid an 1 Mol Ricinusöl besteht. Durch Eingeißen und feines Verteilen der Lösung in Wasser erhält man eine wäßrige Dispersion.

V. 80 Gew.-Teile der Verbindung Nr. 83 werden mit 3 Gew.-Teilen des Natriumsalzes der Diisobutylnaphthalin-α-sulfonsäure, 10 Gew.-Teilen des Natriumsalzes einer Ligninsulfonsäure aus einer Sulfitablauge und 7 Gew.-Teilen pulverförmigem Kieselsäuregel gut vermischt und in einer Hammermühle vermahlen. Durch feines Verteilen der Mischung in Wasser erhält man eine Spritzbrühe.

VI. 3 Gew.-Teile der Verbindung Nr. 124 werden 97 Gew.-Teilen feinteiligem Kaolin innig vermischt. Man erhält auf diese Weise ein Stäubemittel, das 3 Gew.% des Wirkstoffs enthält.

VII.30 Gew.-Teile der Verbindung Nr. 83 werden mit einer Mischung aus 92 Gew.-Teilen pulverförmigem Kieselsäuregel und 8 Gew.-Teilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII.40 Gew.-Teile der Verbindung Nr. 124 werden mit 10 Teilen Natriumsalz eines Phenolsulfonsäureharnstoff-formaldehyd-Kondensates, 2 Teilen Kieselgel und 48 Teilen Wasser innig vermischt. Man erhält eine stabile wäßrige Dispersion. Durch Verdünnen nit Wasser erhält man eine wäßrige Dispersion.

IX. 20 Teile der Verbindung Nr. 83 werden mit 2 Teilen Calciumsalz der Dodecylbenzolsulfonsäure, 8 Teilen Fettalkoholpolyglykolether, 2 Teilen Natriumsalz eines Phenolsulfonsäure-harstoff-formaldehyd-Kondensats und 68 Teilen eines paraffinischen Mineralöls innig vermischt. Man erhält eine stabile ölige Dispersion.

Die erfindungsgemäßen Mittel können in diesen Anwendungsformen auch zusammen mit anderen Wirkstoffen vorliegen, wie z.B. Herbiziden, Insektiziden, Wachstumsregulatoren und Fugiziden, oder auch mit Düngemitteln vermischt und ausgebracht werden. Beim Vermischen mit Fungiziden erhält man dabei in vielen Fällen eine Vergrößerung des fungiziden Wirkungsspektrums.

Die folgende Liste von Fungiziden, Mit denen die erfindungsgemäßen Verbindungen kombiniert werden können, soll die Kombinationsmöglichkeiten erläutern, nicht aber einschränken.

Fungizide, die mit den erfindungsgemäßen Verbindungen kombiniert werden können, sind beispielsweise:
Schwefel,
Dithiocarbamate und deren Derivate, wie
Ferridimethyldithiocarbamat,
Zinkdimethldithiocarbamat,
Zinkethylenbisdithiocarbamat,
Manganethylenbisdithiocarbamat,
Magan-Zink-ethylendiamin-bis-dithiocarbamat,
Tetramethylthiuramdisulfide,
Ammoniak-Komplex von Zink-(N,N-ethylen-bis-dithiocarbamat),
Ammoniak-Komplex von Zink-(N,N'-propylen-bis-dithiocarbamat),
Zink-(N,N'-propylen-bis-dithiocarbamat,
N,N'-Propylen-bis-(thiocarbomoyl)-disulfid;
Nitroderivate, wie
Dinitro-(1-methylheptyl)-phenylcrotonat,
2-sec-Butyl-4,6-dinitrophenyl-3,3-dimethylacrylat,
2-sec-Butyl-4,6-dinitrophenyl-isopropylcarbonat,
5-Nitro-isophthalsäure-di-isopropylester,
heterocyclische Strukturen, wie
2-Heptadecyl-2-imidazolin-acetat,
2,4-Dichlor-6-(o-chloranilino)-s-triazin,
0,0-Diethyl-phtalimidophosphonothioat,
5-Amino-1-(bis-(dimethylamino)-phosphinyl)-3-phenyl-1,2,4-triazol,
2,3-Dicyano-1,4-dithioanthrachinon,
2-Thio-1,3-dithio-(4,5-b)-chinoxalin,
1-(Butylcarbamoyl)-2-benzimidazol-carbaminsäuremethylester,
2-Methoxycarboxylamino-benzimidazol
2-(Furyl-(2)-benaimidazol
2-(Thiazolyl-(4)-benzimidazol
N-(1,1,2,2-Tetrachlorethylthio)-tetrahydrophthalimid
N-Trichlormethylthio-tetrahydrophthalimid
N-Trichlormethlthio-phthalimid
N-Dichlorfluormethylthio-N',N'-dimethyl-N-phenyl-schwefelsäurediamid
5-Ethoxy-3-trichlormethyl-1,2,4-thiadiazol
2-Rhodanmethylthiobenzthiazol
1.4-Dichlor-2,5-dimethoxybenzol
4-(2-Chlorphenylhydrazono)-3-methyl-5-isoxazolon,
Pyridin-2-thio-1-oxid,
8-Hydroxychinolin bzw. dessen Kupfersalz,
2,3-Dihydro-5-carboxanilido-6-methyl-1,4-oxathiin-4,4-dioxid,

2,3-Dihydro-5-carboxanilido-6-methyl-1,4-oxathiin,
2-Methyl-5,6-dihydro-4-H-pyran-3-carbonsäure-anilid
2-Methyl-furan-3-carbonsäureanilid
2,5-Dimethyl-furan-3-carbonsäureanilid
2,4,5-Trimethyl-furan-3-carbonsäureanilid
2,5-Dimethyl-furan-3-carbonsäurecyclohexylamid
N-Cyclohexyl-N-methoxy-2,5-dimethyl-furan-3-carbonsäureamid
2-Methyl-benzoesäure-anilid
2-Jod-benzoesäure-anilid
N-Formyl-N-morpholin-2,2,2-trichlorethylacetal
Piperazin-1,4-diylbis-(1-(2,2,2-trichlor-ethyl)-formamid
1-(3,4-Dichloranilino)-1-formylamino-2,2,2-trichlorethan
2,6-Dimethyl-N-tridecyl-morpholin bzw. dessen Salze
2,6-Dimethyl-N-cyclododecyl-morpholin bzw. dessen Salze
N-[3-(p-tert.-Butylphenyl)-2-methylpropyl]-cis-2,6-dimethylmorpholin
N-[3-(p-tert.-Butylphenyl)-2-methylpropyl]-piperidin
1-[2-(2,4-Dichlorphenyl)-4-ethyl-1,3-dioxolan-2-yl-ethyl]-1H-1,2,4-triazol
1[2-(2,4-Dichlorphenyl)-4-n-propyl-1,3-dixolan-2-yl-ethyl]-1-H-1,2,4-triazol
N-(n-Propyl)-N-(2,4,6-trichlorphenoxyethyl)-N'-imidazol-yl-harnstoff
1-(4-Chlorphenoxy)-3,3-dimethyl-1-(1H-1,2,4-triazol-1-yl)-2-butanon
1-(4-Chlorphenoxy)-3,3-dimethyl-1-(1H-1,2,4-triazol-1-yl)-2-butanol
1-(4-Phenylphenoxy)-3,3-dimethyl-1-(1H-1,2,4-triazol-1-yl)-2-butanol
α-(2-Chlorpheny 1)-α-(4-chlorphenyl)-5-pyrimidin-methanol
5-Butyl-2-dimethylamino-4-hydroxy-6-methyl-pyrimidin
Bis-(p-Chlorphenyl)-pyridinmethanol,
1,2-Bis-(3-ethoxycarbonyl-2-thioureido)-benzol,
1,2-Bis-(3-methoxycarbonyl)-2-thioureido)-benzol
sowie verschiedene Fungizide, wie
Dodecylguanidinacetat,
3-(3-(3,5-Dimethyl-2-oxycyclohexyl)-2-hydroxyethyl)-glutarimid,
Hexachlorbenzol,
DL-Methyl-N-(2,6-dimethyl-phenyl)-N-furoyl(2)-alaninat,
DL-N-(2,6-Dimethyl-phenyl)-N-2'-methoxyacetyl)-alanin-methylester,
N-(2,6-Dimethylphenyl)-N-chloracetyl-D,L-2-aminobutyrolacton,
DL-N-(2,6-Dimethylpenyl)-N-(phenylacetyl)-alaninmethylester
5-Methyl-5-vinyl-3-(3,5-dichlorphenyl)-2,4-dioxo-1,3-oxazolidin
3-(3,5-Dichlorphenyl(5-methyl-5-methoxymethyl-1,3-oxazolidin-2,4-dion
3-(3,5-Dichlorphenyl)-1-isopropylcarbamoylhydantoin
N-(3,5-Dichlorphenyl)-1,2-dimethylcyclopropan-1,2-dicarbonsäureamid
2-Cyano-N-(ethylaminocarbonyl)-2-methoximino)-acetamid
1-(2-(2,4-Dichlorphenyl)-pentyl)-1H-1,2,4-triazol
2,4'-Difluor-α-(1H-1,2,4-triazolyl-1-methyl)-benzhydrylalkohol
N-(3-Chlor-2,6-dinitro-4-trifluormethylphenyl)-5-trifluormethyl-3-chlor-2-amino-pyridin
1-((bis-(4-Fluorphenyl)-methylsilyl)-methyl)-1H-1,2,4-triazol.

Für die folgenden Versuche wurden als Vergleichssubstanzen die bekannten Wirkstoffe N-Tridecyl-2,6-dimethylmorpholin (A). sein Acetat (B) und der 2-(4-[p-Chlorstyryl]-phenyl)-3-methoxy-acrylsäuremethylester (C) verwendet.

Anwendungsbeispiel 1

Wirksamkeit gegen Weizenmehltau

Blätter von in Töpfen gewachsenen Weizenkeimlingen der Sorte "Frühgold" wurden mit wäßriger Spritzbrühe, die 80 % Wirkstoff und 20 % Emulgiermittel in der Trockensubstanz enthielt, besprüht und 24 Stunden nach dem Antrocknen des Spritabelages mit Oidien (Sporen) des Weizenmehltaus (Erysiphe graminis var. tritici) bestäubt. Die Versuchspflanzen wurden anschließend im Gewächshaus bei Temperaturen zwischen 20 und 22°C und 75 bis 80 % relativer Luftfeuchtigkeit aufgestellt. Nach 7 Tagen wurde das Ausmaß der Mehltauentwicklung ermittelt.

Das Ergebnis des Versuches zeigt, daß die Wirkstoffe Nr. 42, 49, 83, 100 und 124 bei der Anwendung als 0,025 und 0,006 %ige (Gew.%) Spritzbrühe eine bessere fungizide Wirkung (90 %) zeigen als die bekannten Wirkstoffe A, B und C (70 %).

Anwendungsbeispiel 2

Wirksamkeit gegen Plasmopara viticola

Blätter von Topfreben der Sorte "Müller-Thurgau" wurden mit wäßriger Spritzbrühe, die 80 % Wirkstoff und 20 % Emulgiermittel in der Trockensubstanz enthielten, besprüht. Um die Wirkungsdauer der Wirkstoffe beurteilen zu können, wurden die Pflanzen nach dem Antrocknen des Spritzbelages 8 Tage im Gewächshaus aufgestellt. Erst dann wurden die Blätter mit einer Zoosporenaufschwemmung von Plasmopara viticola (Rebenperonospora) infiziert. Danach wurden die Reben zunächst für 48 Stunden in einer wasserdampfgesättigten Kammer bei 24°C und anschließend für 5 Tage in einem Gewächshaus mit Temperaturen zwischen 20 und 30°C aufgestellt. Nach dieser Zeit wurden die Pflanzen zur Beschleunigung des Sporangienträgerausbruches abermals für 16 Stunden in der feuchten Kammer aufgestellt. Dann erfolgte die Beurteilung des Ausmaßes des Pilzausbruches auf den Blattunterseiten.

Das Ergebnis des Versuches zeigt, daß die Wirkstoffe Nr. 42, 49, 83, 89, 100 und 124 bei der Anwendung als 0,05 %ige Spritzbrühe eine gute fungizide Wirkung (90 %) haben.

Anwendungsbeispiel 3

Wirksamkeit gegen Septoria nodorum

Blätter von in Töpfen gewachsenen Weizenkeimlingen der Sorte "Jubilar" wurden mit wäßriger Spritzbrühe, die 80 % Wirkstoff und 20 % Emulgiermittel in der Trockensubstanz enthielten, bis zur Tropfnässe besprüht. Am folgenden Tag wurden die angetrockneten Pflanzen mit einer wäßrigen Sporensuspension von Septoria nodorum infiziert und dann für 7 Tage bei 17-19°C und 95 %iger relativer Luftfeuchtigkeit weiter kultiviert. Das Ausmaß des Pilzbefalles wurde dann visuell ermittelt.

Das Ergebnis des Versuches zeigt, daß die Wirkstoffe Nr. 49, 83 und 124 bei der Anwendung als 0,05 %ige Spritzbrühe eine gute fungizide Wirkung (90 %) haben.

**Patentansprüche**

1. Oximether der Formel I

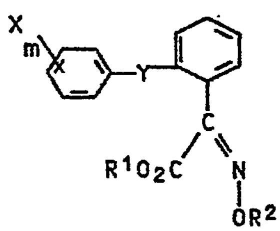

(I)

in der

$R^1$ und $R^2$ gleich oder verschieden sind und Wasserstoff oder Alkyl mit 1 bis 5 C-Atomen bedeuten,
X (m = 1 bis 5) gleiche oder verschiedene Substituenten Halogen, Cyano, Trifluormethyly, Nitro, $C_1$-$C_4$-Alkyl, $C_1$-$C_4$-Alkoxy, gegebenenfalls substituiertes Phenyl, gegebenenfalls substituiertes Phenoxy, gegebenenfalls substituiertes Benzyloxy oder Wasserstoff bedeutet und
Y Methylenoxy, Oxymethylen, Ethylen, Ethenylen, Ethinylen oder Sauerstoff bedeutet.

2. Oximether der Formel I gemäß Anspruch 1, in der
X Wasserstoff, 2-Fluor-, 3-Fluor-, 4-Fluor-, 2-Chlor-6-fluor-, 2-Chlor-, 3-Chlor-, 4-Chlor-, 2-Brom-, 3-Brom-, 4-Brom-,2,4-Dichlor-, 2,6-Dichlor-, 3.5-Dichlor-, 2,4,6-Trichlor-, 2-Chlor-4-methyl-, 2-Methyl-4-chlor-, 2-Methyl-, 3-Methyl-, 4-Methyl-, 4-Ethyl-, 4-Isopropyl-, 4-tert.-Butyl-, 2,4-Dimethyl-, 2,6-Dimethyl-, 2,4,6-Trimethyl-, 2-Methoxy-4-methyl-, 4-Methoxy-2-methyl, 2-Methoxy-, 3-Methoxy-, 4-Methoxy-, 4-Ethoxy-, 4-Isopropoxy-, 2-Trifluormethyl-, 3-Trifluormethyl-, 4-Trifluormethyl-, 2-Cyano-, 4-Cyano-, 3-Nitro-, 4-Nitro-, 4-Phenyl, 4-Benzyloxy-, 4-Phenoxy, Halogenphenoxy, 4-(2-Chlor)-phenoxy-, 4-(2,4-Dichlor)-phenoxy-, $C_1$-$C_4$-Alkylphenoxy, 4-(2-Methyl)-phenoxy-, 3-Benzyloxy-, Halogen-benzyloxy-, 3-(2-Chlor)-benzyloxy-, 3-(2,4-Dichlor)-benzyloxy-, 3-(2-Fluor)-benzyloxy-, 3-(4-Brom)-benzyloxy-, $C_1$-$C_4$-Alkylbenzyloxy-, 3-(2-Methyl)-benzyloxy-, 3-Phenoxy-, 3-(2-Chlor)-phenoxy-, 3-(2,4-Dichlor)-phenoxy-, 3-(2-Fluor)-phenoxy-, 3-(4-Brom)-phenoxy, 3-(2-Methyl)-phenoxy-,
$R^1$ Wasserstoff, Methyl, Ethyl, Isopropyl,
$R^2$ Wasserstoff, Methyl, Ethyl, n-Proply, Isopropyl, n-Butyl, sek.-Butyl, Isobutyl, tert.-Butyl, n-Pentyl oder Neopentyl und Y eine $-CH_2O-$, $-OCH_2-$, $-CH_2-CH_2-$, CH=CH-, C≡C-Gruppe oder 0 bedeutet.

3. Fungizide Mittel, enthaltend einen Oximether der Formel I

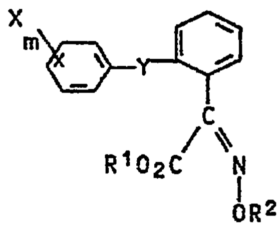

(I)

in der
$R^1$ und $R^2$ gleich oder verschieden sind und Wasserstoff oder Alkyl mit 1 bis 5 C-Atomen bedeuten,
X (m = 1 bis 5) gleiche oder verschiedene Substituenten Halogen, Cyano, Trifluormethyl, Nitro, $C_1$-$C_4$-Alkyl, $C_1$-$C_4$-Alkoxy, gegebenenfalls substituiertes Phenyl, gegebenenfalls substituiertes Phenoxy, gegebenenfalls substituiertes Benzyloxy oder Wasserstoff bedeutet und
Y Methylenoxy, Oxymethylen, Ethylen, Ethenylen, Ethinylen oder Sauerstoff bedeutet,
und inerte Trägerstoffe.

4. Verfahren zur Bekämpfung von Pilzen, dadurch gekennzeichnet, daß man einen Oximether der Formel I

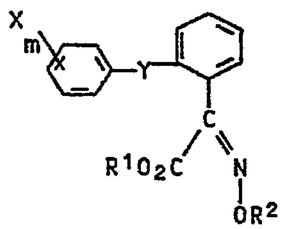

(I)

in der
$R^1$ und $R^2$ gleich oder verschieden sind und Wasserstoff oder Alkyl mit 1 bis 5 C-Atomen bedeuten,
X (m = 1 bis 5) gleiche oder verschiedene Substituenten Halogen, Cyano, Trifluormethyl, Nitro, $C_1$-$C_4$-Alkyl, $C_1$-$C_4$-Alkoxy, gegebenenfalls substituiertes Phenyl, gegebenenfalls substituiertes Phenoxy, gegebenenfalls substituiertes Benzyloxy oder Wasserstoff bedeutet und
Y Methylenoxy, Oxymethylen, Ethylen, Ethenylen, Ethinylen oder Sauerstoff bedeutet,
auf diese oder auf durch Pilzbefall bedrohte Flächen, Pflanzen, Materialien oder Saatgüter einwirken läßt.

5. Verfahren zur Herstellung eines fungiziden Mittels, dadurch gekennzeichnet, daß man eine oder mehrere Oximether der Formel I gemäß Anspruch 1 mit einem festen oder flüssigen Trägerstoff sowie gegebenenfalls mit einem oder mehreren oberflächenaktiven Mitteln mischt.

6. 2-Benzyloxyphenyl-glyoxylsäuremethylester-0-methyloxim.

7. 2-Phenyloxymethylenphenyl-glyoxylsäuremethylester-0-methyloxim.

## Claims

1. An oxime ether of the formula I

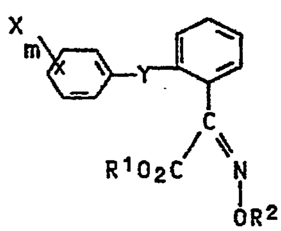

(I)

where $R^1$ and $R^2$ are identical or different and are each hydrogen or alkyl of 1 to 5 carbon atoms, the radicals X (m=1 to 5) are identical or different substituents from the group consisting of halogen, cyano, trifluoromethyl, nitro, $C_1$–$C_4$-alkyl, $C_1$–$C_4$-alkoxy, unsubstituted or substituted phenyl, unsubstituted or substituted phenoxy, unsubstituted or substituted benzyloxy and hydrogen, and Y is methyleneoxy, oxymethylene, ethylene, ethenylene, ethynylene or oxygen.

An ocime ether of the formula I as claimed in claim 1, where X is hydrogen, 2-fluoro, 3-fluoro, 4-fluoro, 2-chloro-6-fluoro, 2-chloro-, 3-chloro-, 4-chloro-, 2-bromo, 3-bromo, 4-bromo, 2,4-dichloro, 2,6-dichloro, 3,5-dichloro, 2,4,6-trichloro, 2-chloro-4-methyl, 2-methyl-4-chloro, 2-methyl, 3-methyl, 4-methyl, 4-ethyl, 4-isopropyl, 4 tert-butyl, 2,4-dimethyl, 2,6-dimethyl, 2,4,6-trimethyl, 2-methoxy-4-methyl, 4-methoxy-2-methyl, 2-methoxy, 3-methoxy, 4-methoxy, 4-ethoxy, 4-isopropoxy, 2-trifluoromethyl, 3-trifluoromethyl, 4-trifluoromethyl, 2-cyano, 4-cyano, 3-nitro, 4-nitro, 4-phenyl, 4-benzyloxy, 4-phenoxy, halophenoxy, 4-(2-chloro)-phenoxy, 4-(2,4-dichloro)-phenoxy, $C_1$–$C_4$-alkylphenoxy, 4-(2-methyl)-phenoxy, 3-benzyloxy, halobenzyloxy, 3-(2-chloro)-benzyloxy, 3-(2,4-dichloro)-benzyloxy, 3-(2-fluoro)-benzyloxy, 3-(4-bromo)-benzyloxy, $C_1$–$C_4$-alkylbenzyloxy, 3-(2-methyl)-benzyloxy, 3-phenoxy, 3-(2-chloro)-phenoxy, 3-(2,4-dichloro)-phenoxy, 3-(2-fluoro)-phenoxy, 3-(4-brome)-phenoxy or 3-(2-methyl)-phenoxy,

$R_1$ is hydrogen, methyl, ethyl, or isopropyl,

$R_2$ is hydrogen, methy, ethyl, n-propyl, isopropyl, n-butyl, sec-butyl, isobutyl, tert-butyl, n-pentyl, or neopentyl and

Y is a $-CH_2O-$, $-OCH_2-$, $-CH_2-CH_2-$, CH=CH or -C≡C- group or 0.

3. A fungicide containing an oxime ether of the formula I

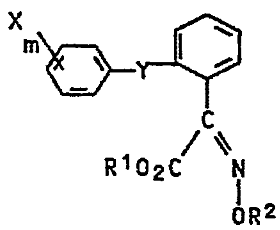

(I)

where $R^1$ and $R^2$ are identical or different and are each hydrogen or alkyl of 1 to 5 carbon atoms, the radicals X (m=1 to 5) are identical or different substituents from the group consisting of halogen, cyano, trifluoromethyl, nitro, $C_1$–$C_4$-alkyl, $C_1$–$C_4$-alkoxy, unsubstituted or substituted phenyl, unsubstituted or substituted phenoxy, unsubstituted or substituted benzyloxy and hydrogen, and Y is methyleneoxy, oxymethylene, ethylene, ethenylene, ethynylene or oxygen, and inert carriers.

4. A process for controlling fungi, wherein an oxime ether of the formula I

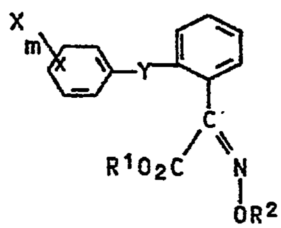

(I)

where $R^1$ and $R^2$ are identical or different and are each hydrogen or alkyl of 1 to 5 carbon atoms, the radicals X (m = 1 to 5) are identical or different substituents from the group consisting of halogen, cyano, trifluoromethyl, nitro, $C_1$–$C_4$-alkyl, $C_1$–$C_4$-alkoxy, unsubstituted or substituted phenyl, unsubstituted or substituted phenoxy, unsubstituted or substituted benzyloxy and hydrogen, and Y is methyleneoxy, oxymethylene, ethylene, ethenylene, ethynylene or oxygen, is allowed to act on the fungi or the areas, plants, materials or seed threatened by fungal attack.

5. A process for the preparation of a fungicide, wherein one or more oxime ethers of the formula I as claimed in claim 1 are mixed with a solid or liquid carrier and, if appropriate, with one or more surfactants.

6. Methyl 2-benzyloxyphenylglyoxylate O-methyloxime.

7. Methyl 2-phenyloxymethylenephenylglyoxylate O-methyloxime.

**Revendications**

1. Oximéther de formule I

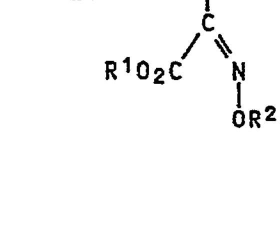

(I)

dans laquelle

$R^1$ et $R^2$ sont identiques ou différents et représentent hydrogène ou alkyle de 1 à 5 atomes C,

X (m=1 à 5), représente des substituants identiques ou différents, halogène, cyano, trifluorométhyle nitro, alkyle en $C_1$–$C_4$, alcoxy en $C_1$–$C_4$, phényle éventuellement substitué, phénoxy éventuellement substitué, benzyloxy éventuellement substitué ou hydrogène et

Y représente méthylénoxy, oxyméthylène, éthylène, éthénylène, éthinylène ou oxygène.

2. Oximéther de formule I selon la revendication 1, dans laquelle

X représente hydrogène 2-fluoro-, 3-fluoro-, 4-fluoro-, 2-chloro-6-fluoro-, 2-chloro-, 3-chloro-, 4-chloro-, 2-bromo-, 3-bromo-, 4-brome-, 2,4dichloro-, 2,6-dichloro-, 3,5-dichloro-, 2,4,6-trichloro-, 2-chloro-4-méthyl-, 2-méthyl-4-chloro-, 2-méthyl-, 3-méthyl-, 4-méthyl-, 4-éthyl-, 4-isopropyl-, 4-tert.-butyl-, 2,4-diméthyl-, 2,6,diméthyl-, 2,4,6-triméthyl-, 2-méthoxy-4-méthyl-, 4-méthoxy-2-méthyl-, 2-méthoxy-, 3-méthoxy-, 4-méthoxy- 4-éthoxy-, 4-isopropoxy-, 2-trifluorométhyl-, 3-trifluorométhyl-, 4-trifluorométhyl-, 2-cyano-, 4-cyano-, 3-nitro-, 4-nitro-, 4-phényl, 4-benzyloxy-, 4-phénoxy, halogénophénoxy, 4-(2-chloro)-phénoxy-, 4-(2,4-dichloro)-phénoxy-, $C_1$–$C_4$-alkylphénoxy, 4-(2-méthyl)-phénoxy-, 3-benzyloxy-, halogèno-benzyloxy-, 3-(2-chloro)-benzyloxy-, 3-(2,4-dichloro)-benzyloxy-, 3-(2-fluoro)-benzyloxy-, 3-(4-bromo)-benzyloxy-, $C_1$–$C_4$-alkylbenzyloxy-, 3-(2-méthyl)-benzyloxy-, 3-phénoxy-, 3-(2-chloro)-phénoxy-, 3-(2,4-dichloro)-phénoxy-, 3-(2-fluoro)-phénoxy-, 3-(4-bromo)-phénoxy, 3-(2-méthyl)-phénoxy-,

$R^1$ hydrogène, méthyle, éthyle, isopropyle,

$R^2$, hydrogène, méthyle, éthyle, n-propyle, isopropyle, n-butyle, sec.-butyle, isobutyle, tert.-butyle, n-pentyle, ou néopentyle et

Y un groupe $-CH_2O-$, $-OCH_2-$, $-CH_2-CH_2-$, CH=CH-, -C=C ou O.

3. Agent fongicide contenant un oximéther de formule I

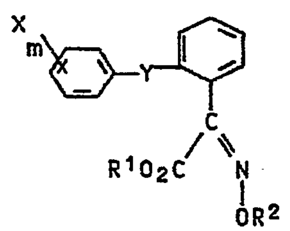

(I)

dans laquelle

$R^1$ et $R^2$ sont identiques ou différents et représentent hydrogène ou alkyle de 1 à 5 atomes C, X (m=1 à 5), représente des substituants identiques ou différents, halogène, cyano, trifluorométhyle nitro, alkyle en $C_1$–$C_4$, alcoxy en $C_1$–$C_4$, phényle éventuellement substitué, phénoxy éventuellement substitué, benzyloxy éventuellement substitué ou hydrogène et

Y représente méthylénoxy, oxyméthylène, éthylène, éthénylène, éthinylène ou oxygène

et des supports inertes.

4. Procédé de lutte contre les champignons, caractérisé par le fait que l'on fait agir sur ceux-ci ou sur les surfaces, plantes, matériaux ou semences, menacés par l'attaque de champignons et oximéther de formule I

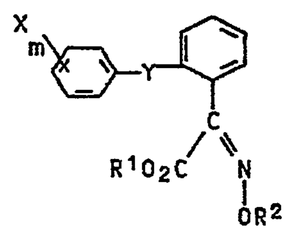

(I)

dans laquelle

$R^1$ et $R^2$ sont identiques ou différents et représentent hydrogène ou alkyle de 1 à 5 atomes C,

X (m=1 à 5), représente des substituants identiques ou différents, halogène, cyano, trifluorométhyle nitro, alkyle en $C_1$–$C_4$, alcoxy en $C_1$–$C_4$, phényle éventuellement substitué, phénoxy éventuellement substitué, benzyloxy éventuellement substitué ou hydrogène et Y représente méthylénoxy, oxyméthylène, éthylène, éthénylène, éthinylène ou oxygène.

5. Procédé de préparation d'un agent fongicide caractérisé par le fait que l'on mélange un ou plusieurs oximéthers de formule I selon la revendication 1 avec un support solide ou rigide ainsi qu'éventuellement avec un ou plusieurs agents tensioactifs.

6. Benzyloxyphényl-glyoxylate de méthyle-O-méthyloxime.

7. Phényloxyméthylenphényl-glyoxylate de méthyle-O-métyloxime.